**Europäisches Patentamt**

(19) **European Patent Office**

**Office européen des brevets**

(11) Veröffentlichungsnummer: **0 064 502**
**B1**

(12) **EUROPÄISCHE PATENTSCHRIFT**

(45) Veröffentlichungstag der Patentschrift:
20.06.84

(21) Anmeldenummer: **81902483.7**

(22) Anmeldetag: **14.08.81**

(86) Internationale Anmeldenummer:
**PCT/EP 81/00124**

(87) Internationale Veröffentlichungsnummer:
**WO 82/01775 (27.05.82 Gazette 82/14)**

(51) Int. Cl.³: **G 03 B 41/18**

(54) **VORRICHTUNG ZUM PROJIZIEREN EINES KENNZEICHENBILDES AUF EINEN FILM.**

(30) Priorität: **14.11.80 DE 3043067**

(43) Veröffentlichungstag der Anmeldung:
**17.11.82 Patentblatt 82/46**

(45) Bekanntmachung des Hinweises auf die Patenterteilung:
**20.06.84 Patentblatt 84/25**

(84) Benannte Vertragsstaaten:
**FR GB NL**

(56) Entgegenhaltungen:
**DE - A - 2 021 494**
**DE - A - 2 710 699**
**FR - A - 2 452 125**

(73) Patentinhaber: **AGFA-GEVAERT Aktiengesellschaft,**
**D-5090 Leverkusen 1 (DE)**

(72) Erfinder: **KRÖBEL, Heinz, Ahornring 61,**
**D-8021 Taufkirchen (DE)**
Erfinder: **FÄRBER, Heinrich, Dietlindenstrasse 9,**
**D-8000 München 40 (DE)**
Erfinder: **MÜLLER, Jürgen, Bozzarisstrasse 7,**
**D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Vorrichtung zum Projizieren eines Kennzeichenbildes von einem Datenträger auf einen in einer Kassette mit einem lichtdicht verschliessbaren Fenster befindlichen Film, mit einer Öffnungseinrichtung zum Entriegeln und Auf- und Zuschieben des Fensters in der Kassette, einer Projektionseinrichtung und Schaltmitteln zum Auslösen der Öffnungseinrichtung und der Belichtung, wobei die Öffnungseinrichtung einen in das Fenster eingreifenden, auf einem Schlitten geführten Mitnehmer aufweist.

Aus der DE-B-20 21 494 ist eine Vorrichtung der eingangs genannten Art bekannt, bei der der Mitnehmer an einem schwenkbar mit dem Schlitten verbundenen Träger angeordnet ist, wobei die Schwenkachse des Trägers senkrecht zur Bewegungsrichtung des Schlittens ausgerichtet ist. Auf den Träger übt eine Schraubenfeder ein Drehmoment aus. Ausserdem ist der Träger mit einem beim Bewegen des Schlittens auf die Kassette auflaufende Führungsrolle versehen, die dabei den Träger in die Eingreifstellung des Mitnehmers verschwenkt.

Bei der bekannten Vorrichtung hat es sich nun gezeigt, dass bei einer Störung des Gerätes oder bei Stromausfall ein in das Fenster eingefahrener Mitnehmer in der eingefahrenen Stellung verharrt, so dass die Kassette nicht mehr aus der Vorrichtung entnommen werden kann. Dies ist jedoch äusserst unpraktisch, da gewöhnlich die Bedienungsperson die Kassette, welche mit einer Ecke in die Vorrichtung eingeschoben ist, an einem Ende halten muss. Die Bedienungsperson ist somit nicht in der Lage, die aufgetretene Störung zu beseitigen.

Aufgabe der Erfindung ist es daher, eine Vorrichtung der eingangs genannten Art derart weiterzubilden, dass eine Kassettenentnahme auch bei Störungen oder Spannungsausfall möglich wird.

Diese Aufgabe wird durch die im Kennzeichen des Anspruchs 1 beschriebene Erfindung gelöst.

Mit der Erfindung wird eine rein mechanische Entkopplung von Mitnehmer und Kassette bewirkt, wodurch die Kassette in jedem Störungsfall aus der Vorrichtung entnommen werden kann, so dass die Bedienungsperson zu weiteren Tätigkeiten freie Hand hat.

Weitere Einzelheiten und Vorteile der Erfindung ergeben sich aus den Unteransprüchen im Zusammenhang mit der Beschreibung eines Ausführungsbeispieles, das anhand von Figuren eingehend erläutert wird. Es zeigen:

Fig. 1 eine perspektivische Ansicht des schematischen Gesamtaufbaus einer erfindungsgemässen Öffnungseinrichtung;

Fig. 2 einen Querschnitt einer Öffnungseinrichtung ähnlich der nach Fig. 1, wobei jedoch die Trägerplatte an der Vorderseite der Vorrichtung gelagert ist; und

Fig. 3 eine Draufsicht, zum Teil aufgebrochen, auf die in Fig. 2 dargestellte Öffnungseinrichtung.

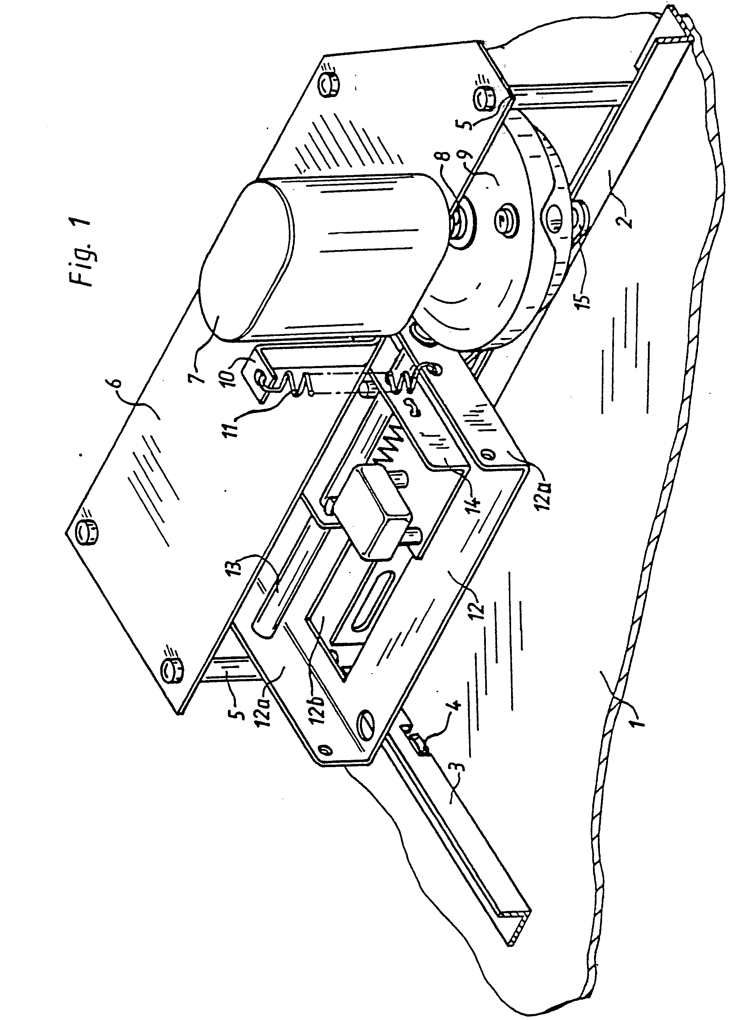

In Fig. 1 ist mit 1 ein Auflagentisch der erfindungsgemässen Vorrichtung bezeichnet, auf welchem sich eine erste Anschlagleiste 2 und im rechten Winkel dazu eine zweite Anschlagleiste 3 befindet. In der Anschlagleiste 3 ist ein Schaltelement 4 eingelassen, das auf das Anlegen einer Filmkassette anspricht. Ebenso ist in der Anschlagleiste 2 ein nicht dargestelltes Schaltelement eingelassen, das in eine normgemässe Vertiefung in der Filmkassette eindringen kann und damit bei richtig eingelegter Kassette nicht betätigt wird. Die Kombination dieser beiden Schaltelemente dient damit dazu, das Vorhandensein und die richtige Lage einer Kassette zu erkennen.

Ausserhalb des Einschubbereiches der Kassette sind Stützpfeile 5 vorgesehen, welche eine Halteplatte 6 tragen. Auf der Oberseite der Halteplatte 6 ist ein Motor 7 angebracht, auf dessen nach unten gerichteter Welle 8 eine Kurbel- und Kurvenscheibe 9 befestigt ist. Auf der Oberseite der Halteplatte 6 ist ferner ein Trägerarm 10 befestigt, an welchem eine Zugfeder 11 für eine schwenkbare Trägerplatte 12 eingehängt ist. Die Lagerung der Trägerplatte ist in diesem Beispiel an der Geräterückseite vorgesehen. Die Trägerplatte 12 weist zwei Seitenteile 12a auf, zwischen denen eine Achse 13 gelagert ist. Auf der Achse 13 ist ein Schlitten 14 verschiebbar angeordnet, der den Mitnehmer bzw. die Mitnehmereinrichtung trägt, wie weiter unten noch beschrieben wird. Der Schlitten 14 steht mit einer Kurbelschwinge 15 in Verbindung, die an der Kurbel- und Kurvenscheibe 9 drehbar angebracht ist. In der Trägerplatte 12 ist ein Ausbruch 12b vorgesehen, durch den der in der Zeichnung nicht sichtbare Mitnehmer nach unten in die Ausnehmung des Kassettenfensters ragt.

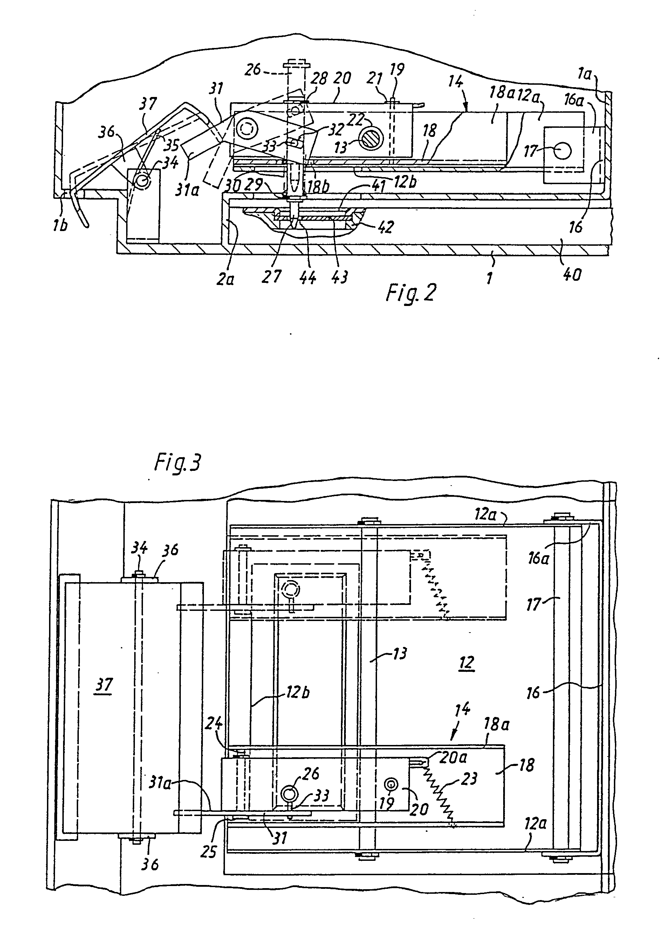

Eine andere Lagerung der Trägerplatte 12 ist zusammen mit der erfindungsgemässen Einrichtung anhand der Fig. 2 und 3 beschrieben. Dabei ist mit 16 eine U-förmige Schiene bezeichnet, die an der Frontseite eines Gehäuses 1a angebracht ist. In den Seitenteilen 16a der U-förmigen Schiene 16 ist eine Achse 17 gelagert, auf welcher die Seitenteile 12a der Trägerplatte 12 drehbar gelagert sind. Die Trägerplatte 12 hat etwa quadratische Form, und trägt den Ausbruch 12b gegenüber ihrer Lagerung auf der Achse 17. Damit wird ein verhältnismässig grosser Schwenkradius erzielt, durch den der Mitnehmer im wesentlichen senkrecht beim Schwenken der Platte 12 auf die Kassette zubewegt wird.

Der Schlitten 14 weist ebenfalls eine U-förmige, nach oben offene Platte 18 mit Seitenteilen 18a und einem Ausbruch 18b auf. In der Schlittenplatte 18 ist eine nicht dargestellte Bohrung vorgesehen, in welche von unten her ein ebenfalls nicht dargestellter Stift ragt, welcher am anderen Ende der Kurbelschwinge 15 angebracht ist. Die Trägerplatte 12 weist ebenfalls eine Aussparung auf, durch die der Stift der Kurbelschwinge 15 ragt und entlang der der Stift mit der Schlittenbewegung geführt werden kann. In den Seitenteilen 18a des Schlittens (14) ist je eine Bohrung ausgeformt, durch welche die Achse 13 geführt ist bzw. auf der der Schlitten 14 verschoben werden kann.

Auf der U-förmigen Platte 18 ist zwischen den Seitenteilen 18a ein rechtwinkliges Vierkantrohr 20 angeordnet, das um einen in der Platte 18 befestigten, parallel zu den Seitenteilen 18a verlaufenden Bolzen 19 schwenkbar angeordnet ist. Das Vierkantrohr 20 ist mittels einer Benzingscheibe 21 an dem Bolzen 19 gesichert. Der Bolzen 19 befindet sich etwa in der Mitte der Platte 18 und in der Nähe der Achse 13, wobei seitlich in dem Vierkantrohr 20 eine gegenüber der Achse 13 grössere Bohrung 22 ausgeformt ist, welche das Schwenken des Vierkantrohres zwischen den Seitenteilen 18a zulässt. Das Vierkantrohr 20 reicht bis an das Ende des Schlittens 14 und der Trägerplatte 12, welches gegenüber der Wippachse 17 liegt, und überstreicht somit die Breite des Ausbruches 12b der Trägerplatte 12. Das Vierkantrohr 20 weist an dem zur Wippachse 17 weisenden Ende eine Öse 20a auf, in welche eine Zugfeder 23 eingehängt ist, welche mit ihrem anderen Ende mit einem Seitenteil 18a verbunden ist, derart, dass das Vierkantrohr 20 die Neigung hat, sich im Uhrzeigersinn zu drehen, wobei ein durch das Vierkantstück 20 ragender Bolzen 25, der parallel zur Achse 13 verläuft, einen an dem anderen Seitenteil 18a angreifenden Anschlag 24 bildet, welcher die Schwenkbewegung des Vierkantrohres 20 begrenzt. In etwa parallel zum Bolzen 19 ist in vertikaler Richtung in dem Vierkantrohr 20 ein Mitnehmer 26 geführt, der im wesentlichen aus einem Rundstück besteht, an welchem ein nach unten ragender Mitnehmerstift 27 angebracht ist. An den beiden Enden des Rundstückes sind Bezingscheiben 28 und 29 angebracht und zwischen der unteren Benzingscheibe und der Unterseite des Vierkantrohres 20 ist eine Druckfeder 30 eingesetzt. Damit wird der Mitnehmer 26 in der mit ausgezogenen Linien dargestellten Stellung gehalten, wobei er für einen Eingriff in ein Kassettenfenster ausreichend weit aus dem Schlitten 14 herausragt und die Bewegung des Mitnehmers 26 aufgrund der oberen Benzingscheibe 28, welche an der Oberseite des Vierkantrohres 20 anliegt, begrenzt ist.

Mit dem Bolzen 25 wird erfindungsgemäss ein abgewinkelter Hebel 31 drehbar an dem Vierkantrohr 20 gehalten, welcher an einem Hebelende ein Langloch 32 aufweist, in welchem ein seitlich in den Mitnehmer eingesetzter Stift 33 geführt ist. Das andere Ende 31a des Hebels 31 ragt über den Bereich des Schlittens 14 hinaus und endet neben einer Betätigungsplatte 32. Die Betätigungsplatte 32 weist an beiden Seiten je eine Lasche 33 auf, welche um eine parallel zur Achse 13 verlaufende Achse 34 drehbar gelagert sind. Die Länge der Betätigungsplatte 32 ist mindestens so lang wie der Verschiebeweg des Schlittens 14. Beide Längsseiten der Platte 32 sind abgewinkelt und die eine Längsseite ragt durch einen Längsschnlitz 1b im Gehäuse 1 an der Rückseite des Gerätes nach aussen, wogegen die andere Längsseite mit ihrer Kante auf das andere Hebelende 31a des Hebels 31 gerichtet ist. Eine auf der Achse 34 aufgehängte Schenkelfeder 35 liegt mit einem Schenkel an einer Gehäusewand und mit dem anderen Schenkel an der Innenseite der Betätigungsplatte 32 an und hält diese derart, dass das aus dem Schlitz 1b herausragende Ende an dem Schlitz aufliegt und das andere Ende den Hebel 31 gerade nicht berührt.

Von einer auf dem Tisch 1 liegenden Kassette 40 ist ein Teil geschnitten, so dass ein Fensterausschnitt 41, eine Führungsplatte 42, ein verschiebbarer Fensterdeckel 43 und eine Bohrung 44 in dem Deckel 43 zu erkennen sind. Ferner ist in Fig. 2 statt einer Anschlagleiste 2 eine entsprechende Wand 2a in dem Gehäuse 1a integriert.

Im Betrieb wird nun die Kassette 1 zum Zwecke der Einbelichtung von Patientendaten oder dergleichen Informationen in die Vorrichtung mit einer Ecke eingeschoben, wobei sie zwischen dem Auflagetische 1 und dem Gehäuse 1a zu liegen kommt und an der der Kassettenhöhe entsprechenden Wand 2a anliegt. Mit der Betätigung des Motors 7 und des Kurbelrades 9 wird, was nicht näher beschrieben ist, zunächst die Trägerplatte 12 um die Achse 17 gegen den Uhrzeigersinn (Fig. 2) nach unten geschwenkt, so dass der Mitnehmerstift 27 in die Bohrung 44 des Fensters 43 eindringt. Mit der weiteren Drehung der Kurbel 9 wird der Schlitten 14 in die mit gestrichelten Linien dargestellte Stellung (Fig. 3) verschoben, wobei das Fenster geöffnet wird. In dieser Stellung erfolgt die Einbelichtung der gewünschten Daten und nach der Einbelichtung wird in einer Bewegungsumkehr zunächst der Schlitten wieder in seine Ausgangsstellung gefahren und die Trägerplatte 12 nach oben geschwenkt, so dass der Stift 27 das Fenster der Kassette 1 freigibt. Wird dieser normale Ablauf durch irgendwelche Einflüsse gestört oder tritt ein Spannungsausfall ein, so ist auch die Tätigkeit des Motors 7 beendet und der Schlitten 14 kann beispielsweise auf halbem Wege stehenbleiben, wobei sich der Mitnehmerstift 27 im Eingriff mit dem Fenster 43 der Kassette 40 befindet. In einem solchen Fall kann nun die Bedienungsperson die aus dem Schlitz 1b herausragende Randleiste der Betätigungsplatte 32 nach oben drücken, so dass diese im Uhrzeigersinn gegen die Federkraft 35 gedreht wird. Damit drückt die andere abgewinkelte Seite in jeder Stellung des Schlittens auf das Ende 31a des Hebels 31, wodurch dieser gegen den Uhrzeigersinn gedreht wird. Mit dieser Drehung wird der Stift 33 in dem Mitnehmer 26 mitgenommen und der Mitnehmer nach oben in die mit gestrichelten Linien dargestellte Stellung gebracht. In dieser Stellung ist der Mitnehmerstift 27 aus dem Fenster und dem Bereich der Kassette 40 gezogen, so dass die Kassette aus der Vorrichtung entnommen werden kann. Sobald dies geschehen ist, kann die Bedienungsperson die Betätigungsplatte 32 loslassen, so dass alle Elemente in ihre Ausgangsstellung zurückkehren und der Mitnehmerstift 27 wieder nach unten gebracht wird. In dieser Stellung ist es nun nicht möglich, eine andere Kassette einzuschieben, das heisst, die vorhandene Störung wird somit auch einer nächsten Bedienungsperson aufgezeigt.

**Patentansprüche**

1. Vorrichtung zum Projizieren eines Kennzeichenbildes von einem Datenträger auf einen in einer Kassette (40) mit einem lichtdicht verschliessbaren Fenster (44) befindlichen Film, mit einer Öffnungseinrichtung zum Entriegeln und Auf- und Zuschieben des Fensters in der Kassette, einer Projektionseinrichtung und Schaltmitteln zum Auslösen der Öffnungseinrichtung und der Belichtung, wobei die Öffnungseinrichtung einen in das Fenster (44) eingreifenden, auf einem Schlitten (14) geführten Mitnehmer aufweist, dadurch gekennzeichnet, dass eine Hebeeinrichtung (31 bis 37) vorgesehen ist, mit der der Mitnehmer (26 bis 30) in jeder Stellung des Schlittens (14) von aussen her aus dem Eingriff mit dem Fenster (44) ausklinkbar ist.

2. Vorrichtung nach Anspruch 1, dadurch gekennzeichnet, dass der Mitnehmer (26, 27) mittels einer Feder (30) in der Eingriffstellung im Fenster (44) gehalten ist.

3. Vorrichtung nach Anspruch 1 oder 2, dadurch gekennzeichnet, dass die Hebeeinrichtung einen mit dem Mitnehmer (26, 27) in Verbindung stehenden Hebel (31) aufweist.

4. Vorrichtung nach Anspruch 3, gekennzeichnet durch eine Betätigungsplatte (37), welche sich längs der Bewegungsbahn des Schlittens (14) erstreckt, mit einer Längsseite aus einem Schlitz (1b) in dem Gerät herausragt und mit der anderen Längsseite in Anlage auf das Ende (31a) des Hebels (31) bringbar ist.

5. Vorrichtung nach Anspruch 3 oder 4, dadurch gekennzeichnet, dass in dem anderen Ende des Hebels (31) ein Langloch (32) ausgeformt ist, in welchem ein seitlich aus dem Mitnehmer ragender Stift (33) geführt ist.

6. Vorrichtung nach einem der Ansprüche 3 bis 5, dadurch gekennzeichnet, dass Mitnehmer (26, 27) und Hebel (31) an einem Vierkantstück (20) gelagert sind, welches um eine zum Mitnehmer etwa parallelen Achse (19) drehbar zwischen zwei Anschlägen (18a, 24) gelagert ist.

**Claims**

1. An apparatus for projecting a characteristic picture from a data carrier onto a film located in a cassette (40) having a window (44) which can be closed in a lightproof manner, with an opening device for releasing and sliding open and closing the window in the cassette, a projection device and switching means for triggering the opening device and the lighting, the opening device comprising an entrainment member which engages in the window (44) and is guided on a slide (14), characterized in that a lifting device (31 to 37) is provided, by means of which the entrainment member (26 to 30) can be disengaged from the exterior from the engagement with the window (44) in any position of the slide (14).

2. An apparatus as claimed in claim 1, characterized in that the entrainment member (26, 27) is retained in the engagement position in the window (44) by means of a spring (30).

3. An apparatus as claimed in claim 1 or 2, characterized in that the lifting device comprises a lever (31) which is in connection with the entrainment member (26, 27).

4. An apparatus as claimed in claim 3, characterized by an actuation plate (37) which extends along the movement path of the slide (14), has one longitudinal side projecting out of a slot (1b) in the appliance and can be brought to bear with the other longitudinal side against the end (31a) of the lever (31).

5. An apparatus as claimed in claim 3 or 4, characterized in that an elongate hole (32) is formed in the other end of the lever (31), in which hole a pin (33), projecting laterally out of the entrainment member, is guided.

6. An apparatus as claimed in one of claims 3 to 5, characterized in that the entrainment member (26, 27) and the lever (31) are mounted on a square portion (20) which is mounted between two stops (18a, 24) so as to rotate about a spindle (19) which is approximately parallel to the entrainment member.

**Revendications**

1. Dispositif de projection d'un signe caractéristique d'un support de données sur un film se trouvant dans une cassette (10) à fenêtre (44) pouvant être fermée d'une manière étanche à la lumière, comprenant un dispositif d'ouverture pour déverrouiller et ouvrir et fermer la fenêtre de la cassette, un dispositif de projection et des moyens de commutation pour déclencher le dispositif d'ouverture et l'exposition, le dispositif d'ouverture présentant un doigt d'entraînement qui pénètre dans la fenêtre (44) et qui est conduit sur un chariot (14), caractérisé en ce qu'il est prévu un dispositif de levage (31 à 39) par lequel le doigt d'entraînement (26 à 30) peut, en toute position du chariot (14), être dégagé de la fenêtre (44) de l'extérieur.

2. Dispositif suivant la revendication 1, caractérisé en ce que le doigt d'entraînement (26, 27) est maintenu en la position d'engagement dans la fenêtre (44) au moyen d'un ressort (30).

3. Dispositif suivant la revendication 1 ou 2, caractérisé en ce que le dispositif de levage présente un levier (31) qui est en relation avec le doigt d'entraînement (26, 27).

4. Dispositif suivant la revendication 3, caractérisé par un plateau de manœuvre (37) qui s'étend le long du trajet de déplacement du chariot (14) dont l'un des côtés longs sort de l'appareil par une fente (1b) et dont l'autre côté long peut être mis en appui sur l'extrémité (31a) du ressort (31).

5. Dispositif suivant la revendication 3 ou 4, caractérisé en ce que, à l'autre extrémité du levier (31) est ménagé un trou oblong (32) dans lequel est guidée une tige (33) faisant saillie lateralement du doigt d'entraînement.

6. Dispositif suivant l'une des revendications 3 à 5, caractérisé en ce que le doigt d'entraînement (26, 27) et le levier (31) sont montés sur une pièce carrée (20) qui est montée entre deux butées (18a, 24) par rotation autour d'un axe (19) sensiblement parallèle au doigt d'entraînement.

Fig. 1

Fig. 2

Fig.3